# EUROPEAN PATENT SPECIFICATION

(11) **EP 3 290 279 B1**
(45) Date of publication and mention of the grant of the patent: **10.07.2019**
(21) Application number: 17185917.6
(22) Date of filing: 11.08.2017
(51) Int. Cl.: B60T 7/08, B60T 13/74, B60T 7/10

(54) **HAND OPERATED ELECTRONIC PARKING BRAKE SYSTEM WITH AN ADJUSTABLE LOAD SIMULATOR**
HANDBETÄTIGTES ELEKTRONISCHES PARKBREMSSYSTEM MIT LASTSIMULATION
SYSTÉME DE FREINAGE ÉLECTRONIQUE À MAIN AVEC SIMULATION DE CHARGE RÉGLABLE

(30) Priority: 29.08.2016 US 201662380765 P; 04.05.2017 US 201715586690
(43) Date of publication of application: 07.03.2018
(73) Proprietor: Dura Operating, LLC, Auburn Hills, MI 48326 (US)
(72) Inventor: STEAKLEY, Brian Edward, Chesterfield, MI 48047 (US); MARYANSKI, Nolan Robert, Rochester, MI 48307 (US)
(74) Representative: Bungartz Christophersen Partnerschaft mbB Patentanwälte

(56) References cited:
- DE-A1- 3 444 301
- DE-A1- 4 228 381
- DE-A1-102015 016 598

## Description

### FIELD

The present disclosure relates generally to a hand operated electronic parking brake system, and more particularly to a hand operated electronic brake system with an adjustable load simulator.

### BACKGROUND

Park brake systems in motor vehicles generally include a hand operated brake lever that engages and disengages a park brake. The park brake may be used to prevent the wheels of the motor vehicle from rotating and may act as a backup to the park pawl associated with the shift lever of the motor vehicle. The park brake typically engages the rear axle or wheels of the motor vehicle and prevents rotation of the rear axle or wheels when the park brake is engaged.

Park brake systems include mechanical park brake systems and electronic park brake systems. Mechanical park brake systems include a cable connected between the hand operated brake lever and the park brake. An operator of the motor vehicle engages the park brake by actuating the hand brake lever from an unengaged position to an engaged position. Movement of the hand brake lever moves the cable, which in turn engages the park brake. Electronic park brake systems, or park brake-by-wire systems, do not include a mechanical connection between the hand brake lever and the park brake. Instead, the position of the hand brake lever is sensed and the park brake is electronically commanded to engage or disengage based on the sensed position of the hand brake lever. While these systems are useful for their intended purpose, the electronic park brake systems lack the haptic feedback of the mechanical park brake system. Thus, there is a need in the art for an electronic park brake system that applies an adjustable load to the hand brake lever to provide haptic feedback to an operator of the motor vehicle.

A method for actuating an actuating device for an electronic parking brake of a vehicle system is known from DE 10 2015 016 598 A1.

DE 42 28 381 A1 discloses a power assisted activator for a vehicle hand brake. DE 34 44 301 A1 shows an electrically controlled and driven brake system for motor vehicles.

### SUMMARY

An electronic park brake system with an adjustable load simulator is provided. The electronic park brake system includes a hand operated brake lever in electronic communication with a park brake. The hand operated brake lever includes a lever pivotally mounted to a mounting bracket. At least one torsion spring is connected at one end to the mounting bracket and at another end to the lever. The torque supplied by the torsion spring to the brake lever is adjustable by an adjustment mechanism.

In another aspect, a motor vehicle electric park brake system is provided, comprising:
- a mounting bracket; and
- a hand brake lever mechanism in electronic communication with a park brake, the hand brake lever mechanism including:
- a brake lever pivotally supported to the mounting bracket;
- at least one spring exerting a torque on the brake lever as the brake lever is rotated from a disengaged position to an engaged position to simulate a mechanical connection between the brake lever mechanism and the park brake; and
- an adjustment mechanism displaced to adjust the at least one spring to change the torque on the brake lever;
wherein a first end of the at least one spring is fixed from movement to the mounting bracket and a second end of the at least one spring is connected to the adjustment mechanism and moves with a rotation of the brake lever.

In another aspect, the motor vehicle park brake system further includes a pivot pin pivotally supporting and connecting the brake lever to the mounting bracket, the pivot pin fixed from rotating with respect to the mounting bracket.

In another aspect, the motor vehicle park brake system the pivot pin includes a groove formed in an outer surface of the pivot pin, the second end of the at least one spring connected to the groove.

In another aspect, the pivot pin includes a groove formed in an outer surface of the pivot pin, and wherein the at least one spring defines a first torsion spring and a second torsion spring, the second end of each of the first torsion spring and the second torsion spring connected to the groove.

In another aspect, the brake lever includes a lever arm extending from a housing portion, the housing portion defining an inner cavity, and wherein the adjustment mechanism includes a threaded bolt and an adjustment pin, the threaded bolt extending through a bolt-hole in the housing portion.

Further aspects, examples, and advantages will become apparent by reference to the following description and appended drawings wherein like reference numbers refer to the same component, element or feature.

### DRAWINGS

The drawings described herein are for illustration purposes only and are not intended to limit the scope of the present disclosure in any way.
FIG. 1 is an isometric view of a hand operated electronic park brake system according to the principles of the present disclosure;
FIG. 2 is a side view of a brake lever with an outer cover removed;
FIG. 3 is an isometric exploded view of the brake lever;
FIG. 4 is an isometric view of a second embodiment of a brake lever in a first position;
FIG. 5 is an isometric view of the second embodiment of the brake lever in a second position;
FIG. 6 is an isometric exploded view of the second embodiment of the brake lever;
FIG. 7 is an isometric view of a third embodiment of a brake lever in a first position;
FIG. 8 is an isometric view of the third embodiment of the brake lever in a second position; and
FIG. 9 is an isometric exploded view of the third embodiment of the brake lever.

### DETAILED DESCRIPTION

The following description is merely exemplary in nature and is not intended to limit the present disclosure, application, or uses.

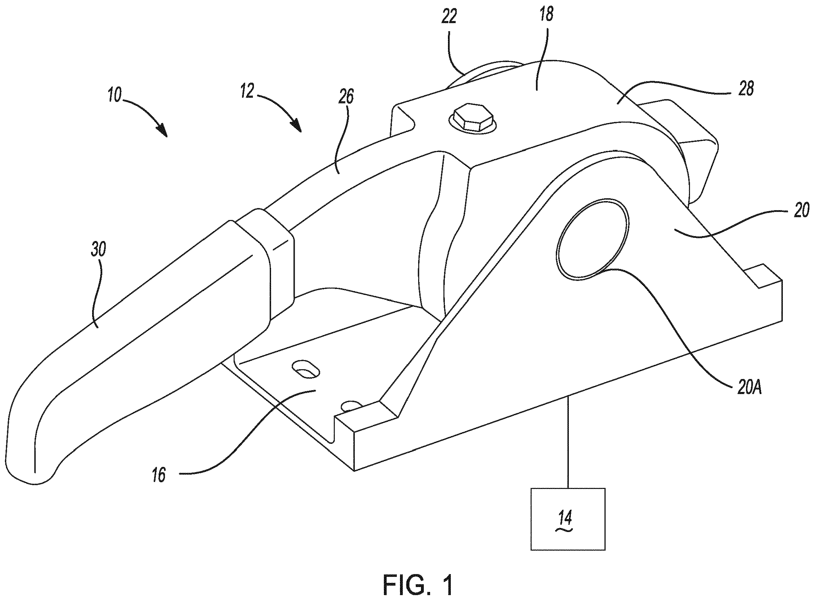

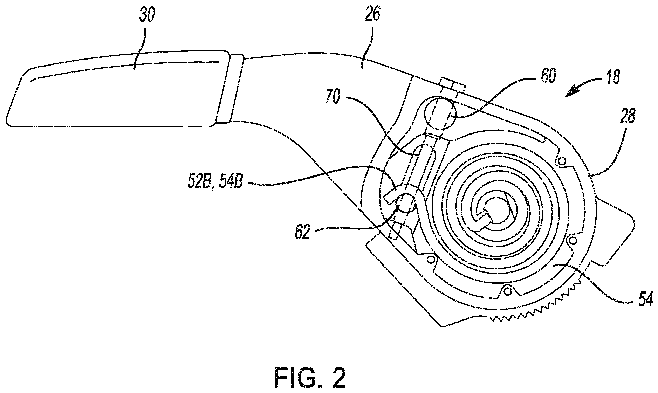

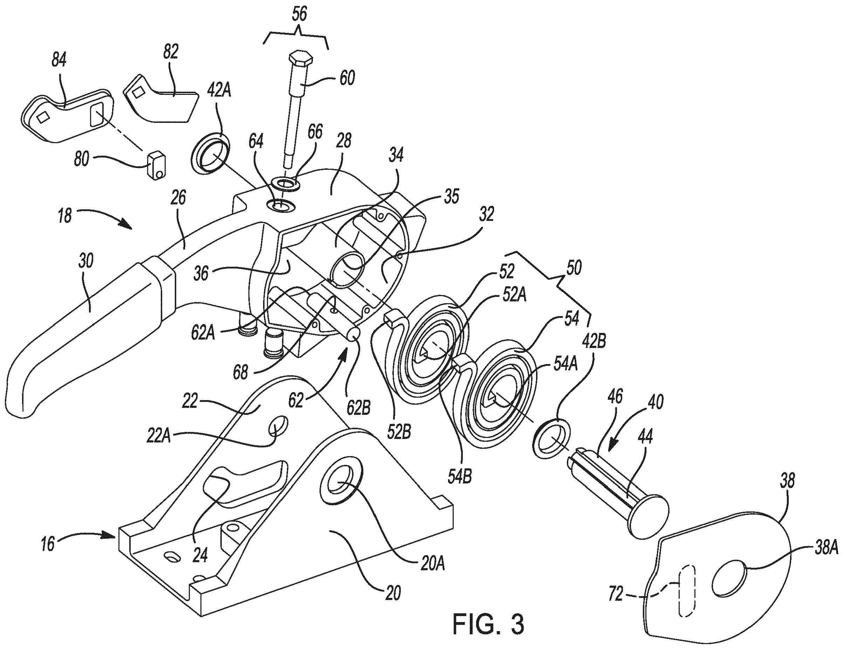

With reference to FIGS. 1 - 3, an electronic hand operated park brake system for a motor vehicle is generally indicated by reference number 10. The park brake system 10 includes a hand brake lever mechanism 12 in electronic communication with a park brake 14. The park brake 14 is operable to prevent rotation of one or more road wheels (not shown) in the motor vehicle. For example, the park brake 14, when engaged, prevents a front or rear axle (not shown) of the motor vehicle from rotating. The park brake 14, when disengaged, allows the front or rear axle to rotate freely.

The hand brake lever mechanism 12 includes a mounting bracket 16 which pivotally supports a brake lever 18. The mounting bracket 16 is preferably fixed to the motor vehicle and includes a first bracket 20 parallel to a second bracket 22. The first bracket 20 includes a first hole 20A while the second bracket 22 includes a second hole 22A. The first hole 20A is coaxial with the second hole 22A. The second bracket 22 further includes an angled window 24.

The brake lever 18 includes a lever arm 26 extending from a housing portion 28. A hand grip 30 is disposed on a distal end of the lever arm 26. The lever arm 26 and hand grip 30 are configured to be actuatable by a user of the motor vehicle to engage the park brake 14.

The housing portion 28 defines an inner cavity 32. A center support 34 extends out from a side wall 36 into the inner cavity 32. The center support 34 is open at both ends and is hollow. The center support 34 includes a longitudinal slot 35 that extends through the center support 34 such that the center support 34, viewed end-on, has a substantially "C" shape. A side cover 38 is connected to the housing portion 28 opposite the side wall 36 to enclose the inner cavity 32. The side cover 38 includes a hole 38A that extends there through. The hole 38A is in coaxial alignment with the center support 34.

A pivot pin or rivet 40 pivotally supports and connects the brake lever 18 to the mounting bracket 16. The pivot pin 40 extends through the holes 20A, 22A in the first and second brackets 20, 22, through the hole 38A in the side cover 38 and through the center support 34 of the brake lever 18. A pair of bushings 42A, 42B are disposed at each end of the pivot pin 40 between the pivot pin 40 and the brake lever 18. The pivot pin 40 is fixed from rotating relative to the mounting bracket 16 by, for example, a key, a fastener, a weld, or the like. The brake lever 18, which supported on the pivot pin 40 by the center support 34, is rotatable about the pivot pin 40. The pivot pin 40 includes a groove 44 formed in an outer surface 46 of the pivot pin 40.

The hand brake lever mechanism 12 further includes a biasing member 50 configured to exert a torque on the brake lever 18 in order to simulate a mechanical connection between the brake lever mechanism 12 and the park brake 14. In the example provided, the biasing member 50 includes a first torsion spring 52, a second torsion spring 54, and an adjustment mechanism 56. In a preferred embodiment, each torsion spring 52, 54 is configured to provide half of a desired torque to simulate the mechanical connection between the brake lever mechanism 12 and the park brake 14 to increase the lifetime of the brake lever mechanism 12 while minimizing size and cost. However, it should be appreciated that any number of torsion springs may be employed without departing from the scope of the present disclosure. In addition, alternative biasing members may be used, as will be described below.

The first torsion spring 52 is disposed about the center support 34 and includes an inner end 52A and an outer end 52B. The inner end 52A extends through the slot 35 in the center support 34 and engages the groove 44 in the pivot pin 40. Thus, the inner end 52A of the first torsion spring 52 is fixed from movement with the mounting bracket 16. The outer end 52B is connected to the adjustment mechanism 56 and moves with the rotation of the brake lever 18.

The second torsion spring 54 is disposed adjacent the first torsion spring 52 and is disposed about the center support 34. The second torsion spring 54 includes an inner end 54A and an outer end 54B. The inner end 54A extends through the slot 35 in the center support 34 and engages the groove 44 in the pivot pin 40. Thus, the inner end 54A of the first torsion spring 54 is fixed from movement with the mounting bracket 16. The outer end 54B is connected to the adjustment mechanism 56 and moves with the rotation of the brake lever 18.

The adjustment mechanism 56 is used to adjust the torque provided by the first and second torsion springs 52, 54 on the brake lever 18 by changing how much the first and second torsion springs 52, 54 are axially twisted. The adjustment mechanism 56 includes an adjuster such as a threaded bolt 60 and an adjustment pin 62. The threaded bolt 60 extends through a bolt-hole 64 in the housing portion 28 into the inner cavity 32. A washer 66 may be disposed between the threaded bolt 60 and the housing portion 28. The adjustment pin 62 includes a threaded bolt-hole 68 which receives the threaded bolt 60. The adjustment pin 62 is disposed perpendicular to the threaded bolt 60 and has a first end 62A opposite a second end 62B. The first end 62A is disposed in a first groove 70 formed in the side wall 36 of the housing portion 28 while the second end 62B is disposed in a second groove 72 formed in the side cover 38. The first and second grooves 70, 72 limit the travel of the adjustment pin 62. The outer ends 52B, 54B of the first and second torsion springs 52, 54 are hooked onto the adjustment pin 62. By rotating the threaded bolt 60, the adjustment pin 62 slides within the first and second grooves 70, 72 and moves the outer ends 52B, 54B of the torsion springs 52, 54 either up or down thus adjusting the torque.

According the further aspects, if only a single torsion spring is used, the adjuster or adjustment pin 62 can be replaced by a yoke through which the threaded bolt 60 passes, the yoke having a substantially rectangular shaped aperture that receives the outer end of the torsion spring. By rotating the threaded bolt 60, the yoke displaces and moves the outer end such as the outer end 52B of the torsion spring 52 either up or down thus adjusting the torque.

In order to detect a position of the brake lever 18, the park brake system 10 includes a switch 80 mounted to the brake lever 18 and a sensor 82 mounted to the mounting bracket 16. The sensor 82 detects a position of the switch 80 through the angled window 24. A cover 84 is disposed overtop the sensor 82. The sensor 82 may communicate with a controller or directly with the park brake 14. Movement of the brake lever 18 is detected by the sensor 82 and, based on a position of the brake lever 18, the park brake 14 may be commanded to engage or disengage.

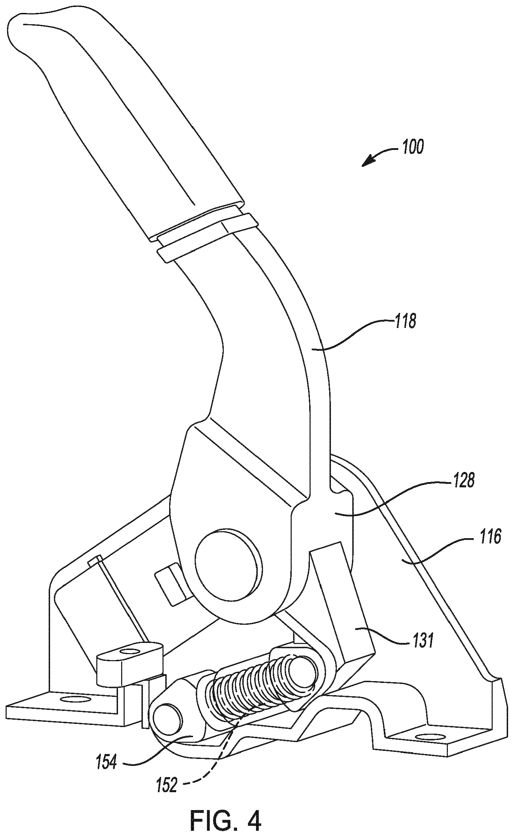

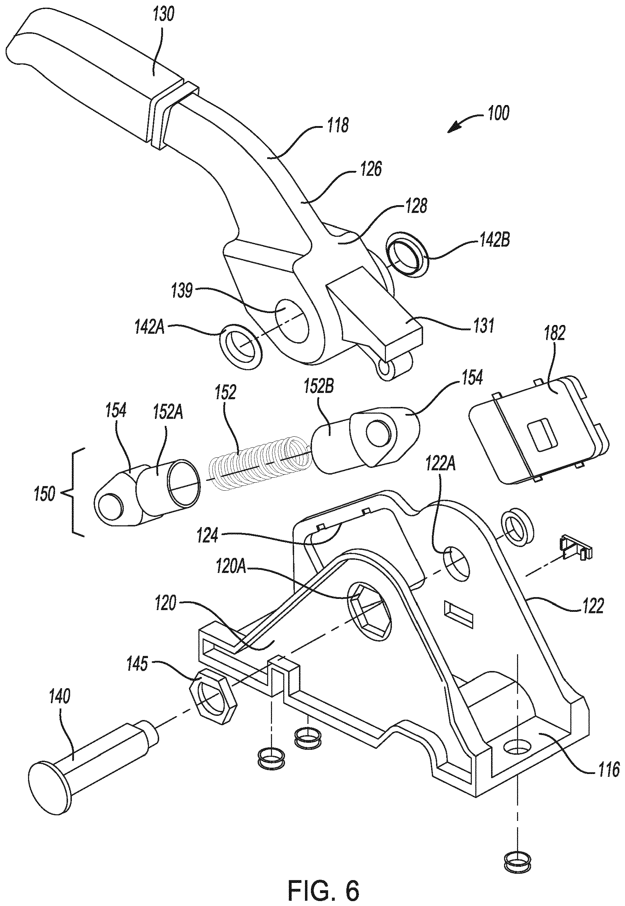

Turning now to FIGS. 4-6, another embodiment of a hand brake lever mechanism is indicated by reference number 100. The brake lever mechanism 100 includes a mounting bracket 116 which pivotally supports a brake lever 118. The mounting bracket 116 is preferably fixed to the motor vehicle and includes a first bracket 120 parallel to a second bracket 122. The first bracket 120 includes a first hole 120A while the second bracket 122 includes a second hole 122A. The first hole 120A is coaxial with the second hole 122A. The second bracket 122 further includes an angled window 124.

The brake lever 118 includes a lever arm 126 extending from a housing portion 128. A hand grip 130 is disposed on a distal end of the lever arm 126. The lever arm 126 and hand grip 130 are configured to be actuatable by a user of the motor vehicle to engage the park brake 14. A second lever arm 131 extends from the housing portion 128 on a side of the housing portion 128 opposite that of the lever arm 126.

A pivot pin or rivet 140 pivotally supports and connects the brake lever 118 to the mounting bracket 116. The pivot pin 140 extends through the holes 120A, 122A in the first and second brackets 120, 122, and through a hole 139 in the housing portion 128 of the brake lever 118. A pair of bushings 142A, 142B may be disposed at each end of the pivot pin 140. The pivot pin 140 is fixed from axially rotating relative to the mounting bracket 116 by, for example, a key 145, a fastener, a weld, or the like. The brake lever 118, supported on the pivot pin 140, is rotatable about the pivot pin 140.

A biasing member 150 is configured to exert a torque on the brake lever 118 in order to simulate a mechanical connection between the brake lever mechanism 100 and the park brake 14. In the example provided, the biasing member 150 includes a die or coiled spring 152. The spring 152 includes a first end 152A pivotally connected to the mounting bracket 116 and a second end 152B pivotally connected to the second lever arm 131 of the brake lever 118. The spring 152 is preferably enclosed in a two-piece cylindrical housing 154. A position of the brake lever 118 is sensed by a sensor 182 mounted in the angled window 124.

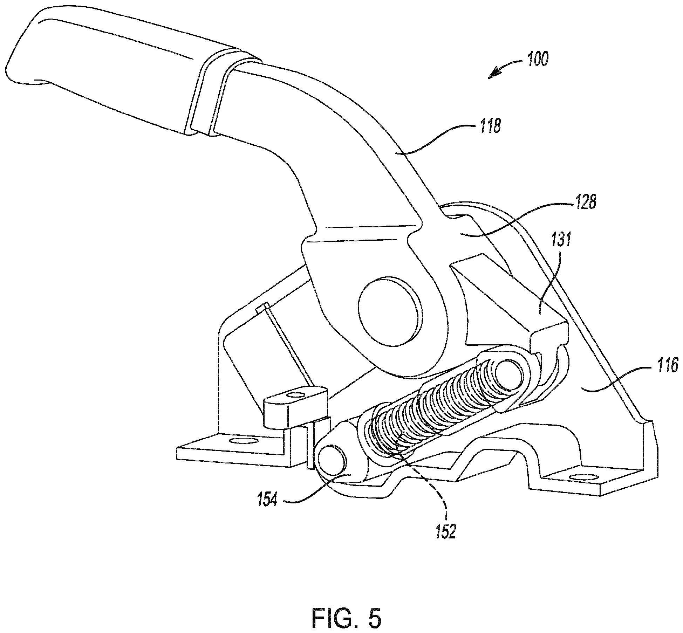

Pivoting the brake lever 118 from the disengaged position, shown in FIG. 5, to the engaged position, shown in FIG. 4, compresses the spring 152. Thus, the spring 152 generates a force resisting rotation of the brake lever 118 as the brake lever moves from the disengaged position toward the engaged position, which thereby exerts torque on the brake lever 118.

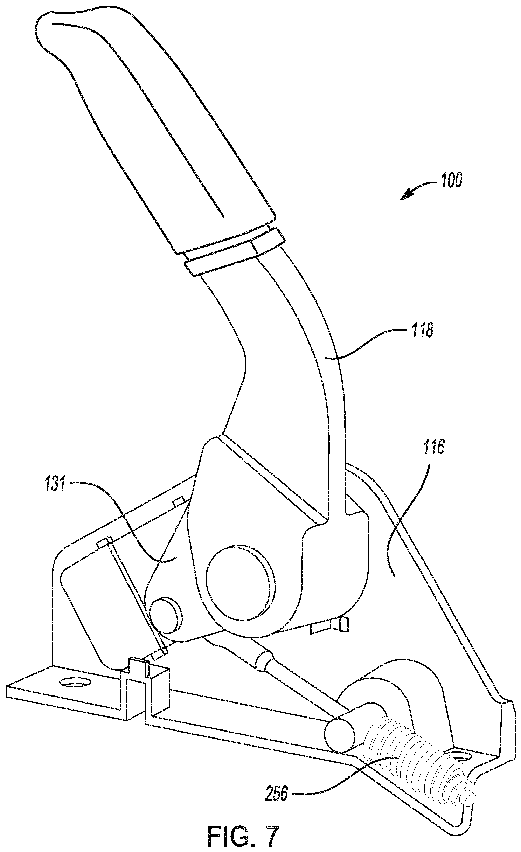

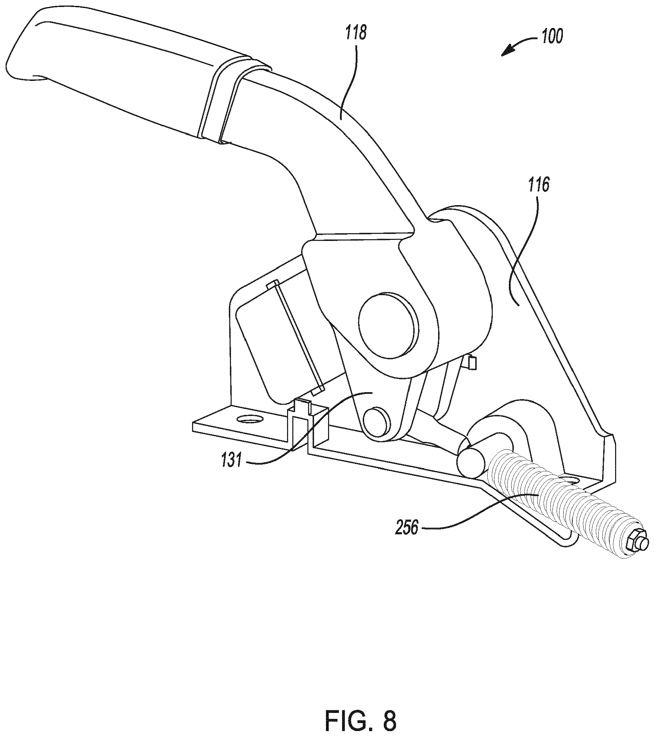

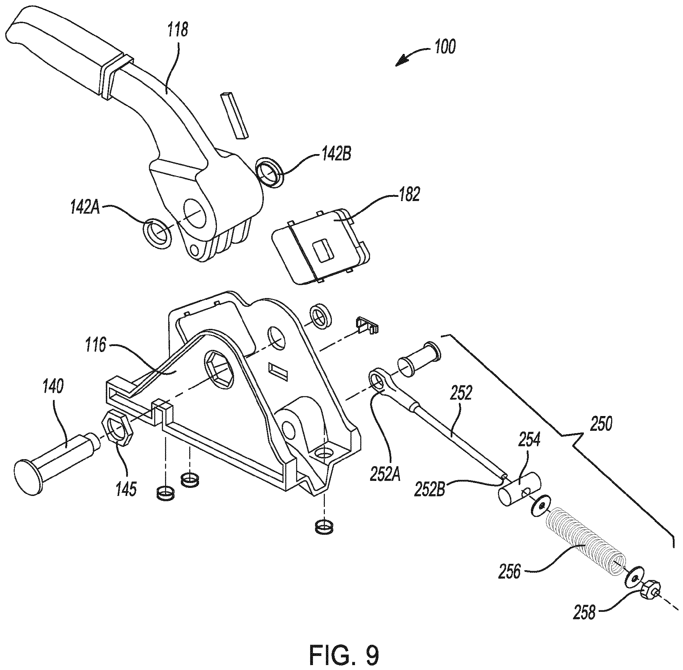

With reference to FIGS. 7-9, a further aspect of a brake lever mechanism is indicated by reference number 200. The brake lever mechanism 200 is similar to the brake lever mechanism 100 shown in FIGS. 4-6 and therefore like parts are indicated by like reference numbers. However, the biasing member 150 in the brake lever mechanism 100 has been replaced in the brake lever mechanism 200 with a biasing member 250 that includes a rod 252, a pin 254, a coiled spring 256, and an adjustment nut 258. The rod 252 is pivotally connected at a first end 252A to the second lever arm 131 of the brake lever 118. The rod 252 extends through an aperture of the pin 254 which is pivotally connected to the mounting bracket 116. The adjustment nut 258 is threaded onto a threaded second end 252B of the rod 252. The coiled spring 256 is disposed between the pin 254 and the adjustment nut 258 about the rod 252. Pivoting the brake lever 118 from the disengaged position, shown in FIG. 8, to the engaged position, shown in FIG. 7, compresses the spring 256. Thus, the spring 256 generates a force resisting rotation of the brake lever 118 as the brake lever 118 moves from the disengaged position toward the engaged position, which thereby exerts torque on the brake lever 118. The amount of torque may be adjusted by tightening or loosening the adjustment nut 258 which compresses or expands the spring 256.

## Claims

1. A motor vehicle electric park brake system (10), comprising:
• a hand brake lever mechanism (12, 100, 200) in electronic communication with a park brake (14),
the hand brake lever mechanism (12, 100, 200) including:
• a brake lever (18, 118) pivotally supported to a mounting bracket (16, 116);
• a biasing member (50, 150, 250) exerting a torque on the brake lever (18, 118) as the brake lever (18, 118) rotates from a disengaged position to an engaged position to simulate a mechanical connection between the hand brake lever mechanism (12, 100, 200) and the park brake (14); and
• an adjustment mechanism (56) displaced to adjust the biasing member (50, 150, 250) to change the torque on the brake lever (18, 118).

2. The motor vehicle park brake system (10) of claim 1, wherein:
• the mounting bracket (16, 116) is fixed to a motor vehicle and includes a first bracket (20, 120) parallel to a second bracket (22, 122); and
• the first bracket (20, 120) includes a first hole (20A, 120A) and the second bracket (22, 122) includes a second hole (22A, 122A), having the first hole (20A, 120A) coaxial with the second hole (22A, 122A).

3. The motor vehicle park brake system (10) of one of the preceding claims, wherein the brake lever (18, 118) includes a lever arm (26, 126) extending from a housing portion (28, 128), the housing portion (28, 128) defining an inner cavity (32).

4. The motor vehicle park brake system (10) of claim 3, further including a center support (34) extending out from a side wall (36) of the housing portion (28, 128) into the inner cavity (32), the center support (34) open at opposed ends and hollow, wherein the center support (34) includes a longitudinal slot (35) that extends through the center support (34).

5. The motor vehicle park brake system (10) of claim 4, further including a pivot pin (40, 140) pivotally supporting and connecting the brake lever (18, 118) to the mounting bracket (16, 116), the pivot pin (40, 140) extending through the first and the second holes (20A, 120A, 22A, 122A) in the first and second brackets (20, 120, 22, 122), and through the center support (34).

6. The motor vehicle park brake system (10) of claim 5, wherein the pivot pin (40, 140) is fixed from rotating with respect to the mounting bracket (16, 116), and wherein the pivot pin (40, 140) includes a groove (44) formed in an outer surface (46) of the pivot pin (40, 140).

7. The motor vehicle park brake system (10) of claim 6, wherein the biasing member (50, 150, 250) defines a torsion spring, the torsion spring disposed about the center support (34) and including an inner end (52A) and an outer end (52B), the inner end (52A) extending through the longitudinal slot (35) in the center support (34) and engaging the groove (44) of the pivot pin (40, 140).

8. The motor vehicle park brake system (10) of one of the preceding claims, wherein the adjustment mechanism (56) includes a threaded bolt (60) and an adjustment pin (62).

9. The motor vehicle park brake system (10) of claim 8, wherein:
• the threaded bolt (60) extends through a bolt-hole (64) in the housing portion (28, 128) into the inner cavity (32); and
• the adjustment pin (62) includes a threaded bolt-hole (68) which receives the threaded bolt (60), the adjustment pin (62) having a first end (62A) opposite a second end (62B), the first end (62A) disposed in a first groove (70) formed in the side wall (36) of the housing portion (28, 128) and the second end disposed in a second groove (72) formed in a side cover (38), the first and second grooves (70, 72) limiting travel of the adjustment pin (62).

10. The motor vehicle park brake system (10) of claim 8, wherein the inner end (52A) of the torsion spring is fixed from movement with the mounting bracket (16, 116) and the outer end (52B) of the torsion spring is connected to the adjustment mechanism (56) and moves with a rotation of the brake lever (18, 118).

11. The motor vehicle park brake system (10) of one of the preceding claims, wherein the brake lever (18, 118) includes a lever arm (26, 126) extending from the housing portion (28, 128) having a hand grip (30) disposed on a distal end of the lever arm (26, 126).

12. The motor vehicle park brake system (10) of claim 11, further including a second lever arm (131) extending from the housing portion (28, 128) on a side of the housing portion (28, 128) opposite that of the lever arm (26, 126), the spring (152) including a first end (152A) pivotally connected to the mounting bracket (16, 116) and a second end (152B) pivotally connected to the second lever arm (131).

13. The motor vehicle electric park brake system (10) of one of the preceding claims, further comprising:
• a switch (80) mounted to the brake lever (18, 118); and
• a sensor (82, 182) mounted to the mounting bracket (16, 116), the sensor (82, 182) detecting a position of the switch (80) and movement of the brake lever (18, 118).

14. The motor vehicle park brake system (10) of one of the preceding claims, wherein the biasing member (50, 150, 250) includes a rod (252), a pin (254), a coiled spring (256), and an adjustment nut (258), and wherein pivoting the brake lever (18, 118) from the disengaged position to the engaged position compresses the biasing member (50, 150, 250).

15. The motor vehicle park brake system (10) of claim 14, wherein the brake lever (18, 118) further includes a first lever arm (126) and a second lever arm (131) extending from the housing portion (28, 128) on a side of the housing portion (28, 128) opposite that of the first lever arm (126), the rod being pivotally connected at a first end (252A) to the second lever arm (131) and extending through an aperture of the pin (140) and pivotally connected to the mounting bracket (16, 116), and the adjustment nut (258) being threaded onto a threaded second end (252B) of the rod (252).

## Patentansprüche

1. Elektrisches Parkbremssystem (10) für ein Kraftfahrzeug, mit:
• einem Handbremshebelmechanismus (12, 100, 200), der in elektronischer Verbindung mit einer Feststellbremse (14) steht, wobei
der Handbremshebelmechanismus (12, 100, 200) aufweist:
• einen Bremshebel (18, 118), der schwenkbar an einer Haltevorrichtung (16, 116) gehalten ist,
• ein Spannelement (50, 150, 250), das ein Moment auf den Bremshebel (18, 118) ausübt, wenn sich der Bremshebel (18, 118) von einer Position, in der er sich nicht im Eingriff befindet, in eine Position dreht, in der er sich im Eingriff befindet, um eine mechanische Verbindung zwischen dem Handbremshebelmechanismus (12, 100, 200) und der Feststellbremse (14) zu simulieren und
• einen Einstellmechanismus (56), der zum Einstellen des Spannelements (50, 150, 250) verlagert wird, um das auf den Bremshebel (18, 118) wirkende Moment zu ändern.

2. Elektrisches Parkbremssystem (10) für ein Kraftfahrzeug nach Anspruch 1, wobei
• die Haltevorrichtung (16, 116) an einem Kraftfahrzeug befestigt ist und einen ersten Halter (20, 120) aufweist, der parallel zu einem zweiten Halter (22, 122) angeordnet ist, und
• der erste Halter (20, 120) eine erste Öffnung (20A, 120A) aufweist und der zweite Halter (22, 122) eine zweite Öffnung (22A, 122A) aufweist, wobei die erste Öffnung (20A, 120A) koaxial zur zweiten Öffnung (22A, 122A) ist.

3. Elektrisches Parkbremssystem (10) für ein Kraftfahrzeug nach einem der vorhergehenden Ansprüche, wobei der Bremshebel (18, 118) einen Hebelarm (26, 126) umfasst, der von einem Gehäuseteil (28, 128) hervorspringt, wobei das Gehäuseteil (28, 128) einen inneren Hohlraum (32) bildet.

4. Elektrisches Parkbremssystem (10) für ein Kraftfahrzeug nach Anspruch 3, das ferner eine Mittelstütze (34) aufweist, die von einer Seitenwand (36) des Gehäuseteils (28, 128) in den inneren Hohlraum (32) verläuft, wobei die Mittelstütze (34) hohl und an gegenüberliegenden Enden offen ist, und wobei die Mittelstütze (34) einen sich durch die Mittelstütze (34) erstreckenden Längsschlitz (35) aufweist.

5. Elektrisches Parkbremssystem (10) für ein Kraftfahrzeug nach Anspruch 4, das ferner einen Drehzapfen (40, 140) aufweist, der den Bremshebel (18, 118) schwenkbar trägt und mit der Haltevorrichtung (16, 116) verbindet, wobei sich der Drehzapfen (40, 140) durch die erste und die zweite Öffnung (20A, 120A, 22A, 122A) in dem ersten und dem zweiten Halter (20, 120, 22, 122) und durch die Mittelstütze (34) erstreckt.

6. Elektrisches Parkbremssystem (10) für ein Kraftfahrzeug nach Anspruch 5, wobei der Drehzapfen (40, 140) gegen Verdrehung gegenüber der Haltevorrichtung (16, 116) fixiert ist, und wobei der Drehzapfen (40, 140) eine an einer Außenfläche (46) des Drehzapfens (40, 140) gebildete Rille (44) aufweist.

7. Elektrisches Parkbremssystem (10) für ein Kraftfahrzeug nach Anspruch 6, wobei das Spannelement (50, 150, 250) von einer Torsionsfeder gebildet ist, wobei die Torsionsfeder um die Mittelstütze (34) herum angeordnet ist und eine inneres Ende (52A) und eine äußeres Ende (52B) aufweist, wobei sich das innere Ende (52A) durch den Längsschlitz (35) in der Mittelstütze (34) erstreckt und mit der Rille (44) des Drehzapfens (40, 140) in Eingriff steht.

8. Elektrisches Parkbremssystem (10) für ein Kraftfahrzeug nach einem der vorhergehenden Ansprüche, wobei der Einstellmechanismus (56) einen Gewindebolzen (60) und einen Einstellstift (62) aufweist.

9. Elektrisches Parkbremssystem (10) für ein Kraftfahrzeug nach Anspruch 8, wobei
• sich der Gewindebolzen (60) durch ein Bolzenloch (64) im Gehäuseteil (28, 128) in den inneren Hohlraum (32) erstreckt und
• der Einstellstift (62) ein den Gewindebolzen (60) aufnehmendes Gewindebolzenloch (68) aufweist, wobei der Einstellstift (62) ein einem zweiten Ende (62B) gegenüberliegendes erstes Ende (62A) aufweist, wobei das erste Ende (62A) in einer in der Seitenwand (36) des Gehäuseteils (28, 128) gebildeten ersten Rille (70) angeordnet ist und das zweite Ende in einer zweiten Rille (72) angeordnet ist, die in einer Seitenabdeckung (38) gebildet ist, wobei die erste und zweite Rille (70, 72) den Verfahrweg des Einstellstiftes (62) begrenzen.

10. Elektrisches Parkbremssystem (10) für ein Kraftfahrzeug nach Anspruch 8, wobei das innere Ende (52A) der Torsionsfeder gegen Bewegung mit der Haltevorrichtung (16, 116) fixiert ist und das äußere Ende (52B) der Torsionsfeder mit dem Einstellmechanismus (56) verbunden ist und sich mit einer Drehung des Bremshebels (18, 118) mitbewegt.

11. Elektrisches Parkbremssystem (10) für ein Kraftfahrzeug nach einem der vorhergehenden Ansprüche, wobei der Bremshebel (18, 118) einen Hebelarm (26, 126) umfasst, der von dem Gehäuseteil (28, 128) hervorspringt und einen an einem distalen Ende des Hebelarms (26, 126) angeordneten Handgriff (30) aufweist.

12. Elektrisches Parkbremssystem (10) für ein Kraftfahrzeug nach Anspruch 11, ferner umfassend einen zweiten Hebelarm (131), der von dem Gehäuseteil (28, 128) an einer Seite des Gehäuseteils (28, 128) hervorspringt, die derjenigen des Hebelarms (26, 126) gegenüberliegt, wobei die Feder (152) ein mit der Haltevorrichtung (16, 116) schwenkbar verbundenes erstes Ende (152A) und ein mit dem zweiten Hebelarm (131) schwenkbar verbundenes zweites Ende (152B) aufweist.

13. Elektrisches Parkbremssystem (10) für ein Kraftfahrzeug nach einem der vorhergehenden Ansprüche, ferner umfassend:
• einen an dem Bremshebel (18, 118) befestigten Schalter (80) und
• einen an der Haltevorrichtung (16, 116) befestigten Sensor (82, 182), wobei der Sensor (82, 182) eine Position des Schalters (80) und eine Bewegung des Bremshebels (18, 118) erfasst.

14. Elektrisches Parkbremssystem (10) für ein Kraftfahrzeug nach einem der vorhergehenden Ansprüche, wobei das Spannelement (50, 150, 250) einen Stab (252), einen Stift (254), eine Schraubenfeder (256) und eine Einstellmutter (258) aufweist und wobei das Schwenken des Bremshebels (18, 118) von der außer Eingriff befindlichen Position zu der in Eingriff befindlichen Position das Vorspannelement (50, 150, 250) zusammendrückt.

15. Elektrisches Parkbremssystem (10) für ein Kraftfahrzeug nach Anspruch 14, wobei der Bremshebel (18, 118) ferner einen ersten Hebelarm (126) und einen von dem Gehäuseteil (28, 128) an einer dem ersten Hebelarm (126) entgegengesetzten Seite des Gehäuseteils (28, 128) hervorspringenden zweiten Hebelarm (131) aufweist, wobei der Stab an einem ersten Ende (252A) mit dem zweiten Hebelarm (131) schwenkbar verbunden ist und sich durch eine Öffnung des Stifts (140) erstreckt und mit der Haltevorrichtung (16, 116) schwenkbar verbunden ist und wobei die Einstellmutter (258) auf ein mit einem Gewinde versehenes, zweites Ende (252B) des Stabs (252) aufgeschraubt ist.

## Revendications

1. Système de frein de stationnement électrique (10) pour véhicule automobile, avec:
• un mécanisme de levier de frein à main (12, 100, 200) en communication électronique avec un frein de stationnement (14),
le mécanisme de levier de frein à main (12, 100, 200) comprenant:
• un levier de frein (18, 118) supporté pivotant sur un support de montage (16, 116) ;
• un élément de sollicitation (50, 150, 250) exerçant un couple sur le levier de frein (18, 118) pendant que le levier de frein (18, 118) pivote d'une position désengagée à une position engagée pour simuler une connexion mécanique entre le mécanisme de levier de frein à main (12, 100, 200) et le frein de stationnement (14) ; et
• un mécanisme de réglage (56) déplacé pour régler l'élément de sollicitation (50, 150, 250) pour modifier le couple sur le levier de frein (18, 118).

2. Système de frein de stationnement électrique (10) pour véhicule automobile selon la revendication 1, dans lequel :
• le support de montage (16, 116) est fixé à un véhicule à moteur et comprenant un premier support (20, 120) parallèle à un second support (22, 122) ; et
• le premier support (20, 120) comporte un premier trou (20A, 120A) et le second support (22, 122) comporte un second trou (22A, 122A), le premier trou (20A, 120A) étant coaxial avec le second trou (22A, 122A).

3. Système de frein de stationnement électrique (10) pour véhicule automobile selon l'une quelconque des revendications précédentes, ledit levier de frein (18, 118) comprenant un bras de levier (26, 126) s'étendant depuis un partie logement (28, 128), la partie logement (28, 128) définissant une cavité interne (32).

4. Système de frein de stationnement électrique (10) pour véhicule automobile selon la revendication 3, comprenant en outre un support central (34) s'étendant hors d'une paroi latérale (36) de la partie logement (28, 128) à l'intérieur de la cavité interne (32), le support central (34) étant ouvert au niveau d'extrémités opposées et creux, ledit support central (34) comprenant une fente longitudinale (35) qui s'étend à travers le support central (34).

5. Système de frein de stationnement électrique (10) pour véhicule automobile selon la revendication 4, comprenant en outre un axe de pivotement (40, 140) supportant et reliant pivotant le levier de frein (18, 118) au support de montage (16, 116), l'axe de pivotement (40, 140) s'étendant à travers les premier et second trous (20A, 120A, 22A, 122A) dans les premier et second supports (20, 120, 22, 122), et à travers le support central (34).

6. Système de frein de stationnement électrique (10) pour véhicule automobile selon la revendication 5, ledit axe de pivotement (40, 140) étant empêché de tourner par rapport au support de montage (16, 116), et ledit axe de pivotement (40, 140) comportant une rainure (44) formée dans une surface externe (46) de l'axe de pivotement (40, 140).

7. Système de frein de stationnement électrique (10) pour véhicule automobile selon la revendication 6, ledit élément de sollicitation (50, 150, 250) définissant un ressort de torsion, le ressort de torsion étant disposé autour du support central (34) et comportant une extrémité interne (52A) et une extrémité externe (52B), l'extrémité interne (52A) s'étendant à travers la fente longitudinale (35) dans le support central (34) et entrant en contact avec la rainure (44) de l'axe de pivotement (40,140).

8. Système de frein de stationnement électrique (10) pour véhicule automobile selon l'une quelconque des revendications précédentes, ledit mécanisme de réglage (56) comportant un boulon fileté (60) et une cheville de réglage (62).

9. Système de frein de stationnement électrique (10) pour véhicule automobile selon la revendication 8, dans lequel :
• le boulon fileté (60) s'étend à travers un trou pour boulon (64) dans la partie logement (28, 128) à l'intérieur de la cavité interne (32) ; et
• la cheville de réglage (62) comporte un trou pour boulon fileté (68) qui reçoit le boulon fileté (60), la cheville de réglage (62) comportant une première extrémité (62A) opposée à une seconde extrémité (62B), la première extrémité (62A) étant disposée dans une première rainure (70) formée dans la paroi latérale (36) de la partie logement (28, 128) et la seconde extrémité étant disposée dans une seconde rainure (72) formée dans un couvercle latéral (38), les première et seconde rainures (70, 72) limitant le déplacement de la cheville de réglage (62).

10. Système de frein de stationnement électrique (10) pour véhicule automobile selon la revendication 8, ladite extrémité interne (52A) du ressort de torsion étant empêchée de se déplacer avec le support de montage (16, 116) et l'extrémité externe (52B) du ressort de torsion étant reliée au mécanisme de réglage (56) et se déplaçant avec la rotation du levier de frein (18, 118).

11. Système de frein de stationnement électrique (10) pour véhicule automobile selon l'une quelconque des revendications précédentes, ledit levier de frein (18, 118) comportant un bras de levier (26, 126) s'étendant depuis la partie logement (28, 128) possédant une poignée (30) disposée sur une extrémité distale du bras de levier (26, 126).

12. Système de frein de stationnement électrique (10) pour véhicule automobile selon la revendication 11, comprenant en outre un second bras de levier (131) s'étendant depuis la partie logement (28, 128) sur un côté de la partie logement (28, 128) opposé à celui du bras de levier (26, 126), le ressort (152) comprenant une première extrémité (152A) reliée pivotante au support de montage (16, 116) et une seconde extrémité (152B) reliée pivotante au second bras de levier (131).

13. Système de frein de stationnement électrique (10) pour véhicule automobile selon l'une quelconque des revendications précédentes, comprenant en outre :
• un commutateur (80) monté sur le bras de levier (18, 118) ; et
• un capteur (82, 182) monté sur le support de montage (16, 116), le capteur (82, 182) détectant une position du commutateur (80) et le mouvement du levier de frein (18, 118).

14. Système de frein de stationnement électrique (10) pour véhicule automobile selon l'une quelconque des revendications précédentes, ledit élément de sollicitation (50, 150, 250) comportant une tige (252), une cheville (254), un ressort enroulé (256) et un écrou de réglage (258), et le pivotement du bras de levier (18, 118) de la position désengagée à la position engagée comprimant l'élément de sollicitation (50, 150, 250).

15. Système de frein de stationnement électrique (10) pour véhicule automobile selon la revendication 14, ledit levier de frein (18, 118) comprenant en outre un premier bras de levier (126) et un second bras de levier (131) s'étendant depuis la partie logement (28,128) sur un côté de la partie logement (28, 128) opposé à celui du premier bras de levier (126), la tige étant reliée pivotante au niveau d'une première extrémité (252A) au second bras de levier (131) et s'étendant à travers une ouverture de la cheville (140) et reliée pivotante au support de montage (16, 116), et l'écrou de réglage (258) étant vissé sur une seconde extrémité filetée (252B) de la tige (252).
